# EUROPÄISCHE PATENTANMELDUNG

(11) **EP 1 800 937 A2**
(43) Veröffentlichungstag der Anmeldung: **27.06.2007**
(21) Anmeldenummer: 06022188.4
(22) Anmeldetag: 24.10.2006
(51) Int. Cl.: B60N 2/02

(54) **Automatische Sitzflächen- und Winkelanpassung**

(30) Priorität: 22.12.2005 DE 102005061653
(71) Anmelder: Volkswagen Aktiengesellschaft, 38436 Wolfsburg (DE)
(72) Erfinder: Münkner, Peter, 38114 Braunschweig (DE); Walter, Helmut, 38162 Cremlingen (DE); Riedel, Stephan, 67824 Feilbingert (DE); Tatter, Hasso, 38165 Lehre (DE); Sanojca, Maik, 38536 Meinersen (DE); Thom, Mathias, 38106 Braunschweig (DE)

(57) **Zusammenfassung**

Die Erfindung betrifft einen Sitz, insbesondere Kraftfahrzeugsitz, mit einer Sitzauflage (10), die ein Sitzteil (12) und eine relativ dazu verlagerbare Rückenlehne (14) umfasst, wobei die Sitzauflage (10) unter Veränderung einer Sitzteilfläche (12SF) und einer Rückenlehnenfläche (14RF) zur Lageverstellung an einer Tragkonstruktion (16) des Sitzes beweglich angeordnet ist.

Es ist vorgesehen, dass die Tragkonstruktion (16) ein Basisgestell (18) und einen ersten Verstellmechanismus (20, 20A) umfasst, wobei das Basisgestell (18) ein längsverschiebbares, sitzteilseitiges und rückenlehnenseitiges Basisgestell (18A, 18B) aufweist, zwischen denen ein längenveränderliches, die Sitzauflage (10) tragendes und/oder ausbildendes, Element (22) angeordnet ist, wobei die Verschiebung des Basisgestells (18, 18A, 18B) zu einer Aktivierung des am längenveränderlichen Element (22, 40) angreifenden Verstellmechanismus (20) führt, der sowohl eine Anpassung eines Sitzflächenwinkels (α', α") als auch eine Veränderung der Sitzlänge (SL', SL") und einhergehend eine Veränderung der Sitzteilfläche (12SF', 12SF") sowie der Rückenlehnefläche (14RF', 14RF") bewirkt.

## Beschreibung

Die Erfindung betrifft einen Sitz, insbesondere Fahrzeugsitz, mit den im Oberbegriff des Anspruchs 1 und 6 genannten Merkmalen.

Es ist bekannt, Sitze, insbesondere Kraftfahrzeugsitze, in verschiedenen Ausführungen einzusetzen und die Kraftfahrzeugsitze entsprechend der damit einhergehenden Verstellmöglichkeiten mit möglichst einfach handhabbaren Bedienmöglichkeiten auszustatten.

Moderne und komfortable Kraftfahrzeuge bieten im Bereich der Vordersitze und Hintersitzänlagen mittlerweile eine Reihe von Verstellmöglichkeiten an.

Derartige Kraftfahrzeugsitze weisen meist ein Sitzteil und ein Rückenlehnenteil auf, welche mittels mehrerer Stellantriebe relativ zueinander und relativ zu dem am Fahrzeugboden gehaltenen Sitzträger verstellbar sind.

Bekannte Kraftfahrzeugsitze weisen nach dem heutigen Stand der Technik folgende Verstellmöglichkeiten auf. Das Sitzteil ist beispielsweise mit einer Einrichtung zur Höhenverstellung, Neigungsverstellung, Sitztiefenverstellung und Sitzlängsverstellung ausgestattet. Das Rückenlehnenteil weist beispielsweise eine Einrichtung zur Lehnenverstellung, Lehnenkopfverstellung und einer zum Standard gehörenden Höhenverstellung einer Kopfstütze auf. Ferner ist das Rückenlehnenteil bei modernen und insbesondere bei aus der Luxus-Klasse bekannten Kraftfahrzeugen mit einer mindestens Vier-Wege-Lordose ausgestattet, die über eine eigene Einrichtung zur Verstellung der Lordose verfügt.

Zusätzlich sind heute unterschiedliche Konzepte bekannt, die eine besonders an die Komfortwünsche der Kraftfahrzeugbenutzer angepasste Kinematik aufweisen.

Insbesondere bei Kraftfahrzeugsitzen, bei denen der Sitz - also Sitzteil und Rückenlehneriteil - als Sitzauflage in einem Sitzträger ausgeführt ist, ergeben sich besonders gute, an den Kraftfahrzeugnutzer anpassbare, Einstellungsmöglichkeiten.

Aus der DE 199 51 625 C2 ist ein Kraftfahrzeugsitz bekannt, der eine solche Sitzauflage aufweist, die eine Sitzfläche sowie eine damit schwenkbar verbundene Rückenlehne hat, wobei die Sitzfläche und die Rückenlehne zum Lageverstellen der Sitzauflage an einem Sitzträger verstellbar und festlegbar gehalten sind, wodurch die Rückenneigung der Rückenlehne bei festgelegtem Sitzwinkel zwischen Rückenlehne und Sitzfläche durch Verschwenken der Sitzauflage relativ zum Sitzträger verstellbar ist, und die Sitzneigung der Sitzfläche bei in Sitzlängsrichtung festgelegtem Anlenkpunkt der Sitzfläche am Sitzträger durch Verschwenken der Sitzfläche relativ zur Rückenlehne verstellbar ist.

Die Sitzneigungsverstellung erfolgt durch eine Einrichtung, einen Stellantrieb, der in ein Schwenkgelenk zwischen Sitzfläche und Rückenlehnenteil integriert ist. Eine Sitzneigungsverstellung ist auch durch einen Linear-Stellantrieb ausführbar. Der Linear-Stellantrieb wird bei in Sitzlängsrichtung festgelegtem Anlenkpunkt der Sitzfläche am Sitzträger durch Verschwenken der Sitzfläche relativ zum Rückenlehnenteil verstellt.

Die Rückenneigung des Rückenlehnenteils erfolgt im Wesentlichen als Zwangsführung bei dem festgelegten Sitzwinkel zwischen Rückenlehnenteil und Sitzfläche, durch Verschwenken der Sitzauflage relativ zum Sitzträger.

Eine ähnliche Sitzverstellung mit zugehörigem Stellantrieben gemäß der DE 199 51 625 C2 ist aus der DE 198 53 156 A1 entnehmbar. Zum Verstellen der Sitzposition sind Stellantriebe vorgesehen, die an der Unterseite des Sitzteiles angreifen. Das Sitzteil - sowie das damit über eine Gelenkachse verschwenkbar verbundene Rückenlehnenteil des Sitzes - ist in einer Zwangsführung geführt, die als Kulissenführung ausgebildet ist. Sowohl das Sitzteil als auch das Rückenlehnenteil sind dazu jeweils, mit Abstand zur Gelenkachse, mit einer Führungsachse in einer Führungs- oder Kulissenbahn geführt. Während die dem Sitzteil zugeordnete Führungsbahn kreisbogenförmig in Fahrtrichtung nach oben verläuft, ist die Führungsachse des Rückenlehnenteiles in einer entgegen der Fahrtrichtung nach oben geneigten linearen Führungsbahn geführt. Das Sitzteil und das Rückenlehnenteil sind jeweils um ihre Führungsachse oder Führungszapfen drehbar in ihren Führungsbahnen gehalten.

Während mittels des einen Stellantriebes die Neigung der aus Sitzteil und Rückenlehnenteil gebildeten Sitzschale insgesamt verändert und damit auch der Neigungswinkel des Rückenlehnenteiles verstellt werden kann, ist mit Hilfe des anderen Stellantriebes der Winkel zwischen Sitzteil und Rückenlehnenteil verstellbar.

Die Stellantriebe, welche die Stellbewegungen erzeugen, sind über einen Freigabeschalter aktivierbar und von Körperpositionsmeldern ansteuerbar.

Die Ansteuerung über Körperpositionsmelder ist jedoch sehr aufwendig und sieht gemäß der Druckschrift DE 198 53 156 A1 stets eine Verstellung in Verbindung mit einer Gewichtssensorik vor. Aus heutiger technischer Sicht ist eine Gewichtssensorik, die unter konkreten, stets unterschiedlichen Bedingungen zum Einsatz kommt, nur unter extrem hohen Kosten zu erreichen. Dies stellt einen großen Nachteil der bekannten Lösungen dar. Wünschenswert ist also eine Lösung, die es ermöglicht die Bedienung der bekannten Verstellmöglichkeiten und der dargestellten bekannten Kinematik des Standes der Technik vereinigt und dabei eine Vielzahl von weiteren Funktionen übernehmen kann.

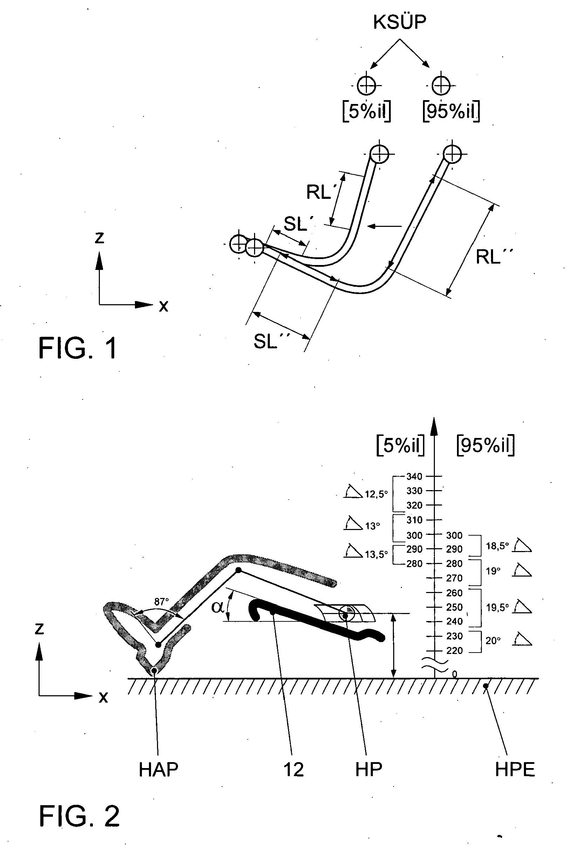

Ausgehend von diesem Stand der Technik zeigen Figur 1 und 2 eine grundsätzliche statistische Einteilung, deren daraus basierenden Erkenntnisse, die bekannten Lösungen teilweise gerecht werden, jedoch sind dieses Lösungen kompliziert aufgebaut und erfordern zumeist vom Bediener eine Vielzahl von manuellen Einstellbetätigungen, die den Benutzer teilweise überfordern und bei denen es sogar zu Fehleinstellungen kommen kann.

Die grundsätzliche statistische Aussage besteht darin, dass eine Sitzanpassung an die Perzentilgruppe weiblich [5%il] bis zur Perzentilgruppe männlich [95%il] unterschiedliche Rückenlehnen- als auch Sitzflächenlängen RL, SL sowie abhängig davon bestimmte Sitzwinkel α benötigt.

Dazu zeigt Figur 1 beispielhaft eine schematisierte Seitenansicht der Analyse einer Körperhaltung der Perzentilgruppe weiblich [5%il] und der Perzentilgruppe männlich [95%il].

Die Analyse zeigt zusätzlich in der schematischen Seitenansicht die Kopfstützenpunkte, die bei den beiden Perzentilgruppen ebenfalls an verschiedenen Positionen benötigt werden. Figur 1 macht deutlich, dass der in X-Richtung weiter vorn liegende Fahrzeugsitz eine verkürzte Sitzlänge SL' und eine verkürzte Rückenlehnenlänge RL' für die Perzentilgruppe weiblich [5%il] benötigt. Es wird aber auch sichtbar, dass auch ein kleinerer Sitzflächenwinkel α für die statistische Perzentilgruppe weiblich [5%il] benötigt wird. Die statistischen Anforderungen für den kleineren Sitzflächenwinkel α sind auch in Figur 2 dargestellt.

Die Figur 1 macht ferner deutlich, dass der in X-Richtung weiter hinten liegende Fahrzeugsitz eine vergrößerte Sitzlänge SL" und eine vergrößerte Rückenlehnenlänge RL" für die Perzentilgruppe männlich [95%il] benötigt. Der größere Sitzflächenwinkel α für die statistische Perzentilgruppe männlich [95%il] ist die Folge. Die statistischen Anforderungen für den größeren Sitzflächenwinkel α sind ebenfalls in Figur 2 dargestellt.

Figur 2 zeigt einen Hüftpunkt beziehungsweise eine Hüftpunktposition HP, die je nach den statistischen Überprüfungen bei der Perzentilgruppe weiblich [5%il] beziehungsweise der Perzentilgruppe männlich [95%il] gegenüber einem Nullpunkt eine statistisch vorbestimmbare optimale Höhe H einnehmen sollte. Anhand der nebenliegenden Skala sind in Abhängigkeit dieser Höhe H bestimmte Sitzflächenwinkel α ermittelt worden. Wie Figur 2 zeigt, sind also, ausgehend von einer Hackenpunktebene HPE = 0, für die Perzentilgruppe weiblich [5%il] Hüftpunktpositionen HP ermittelt worden, die zwischen 280 und 340 mm liegen und dabei einen Sitzflächenwinkel α zwischen 13,5 ° bis 12,5 benötigen. Diese Verhältnisse gehen aus den ergonomischen Anforderungen der unterschiedlichen Körpergrößen der Perzentilfrau [5%il] beziehungsweise dem Perzentilmann [95%il] auch in Abhängigkeit des Hackenaufstandspunktes HAP, in Figur 2 gezeigt, hervor.

Dem gegenüber erfordert die Perzentilgruppe männlich [95%il], wiederum ausgehend von der Hackenpunktebene HPE = 0, Hüftpunkthöhen H zwischen 220 bis 300 mm, denen ein Sitzflächenwinkel α von 20 ° bis 18,5 ° zugeordnet werden kann.

Ausgehend von diesen Überlegungen und statistischen Anforderungen liegt der Erfindung die Aufgabe zugrunde einen Sitz zu schaffen, der in Abhängigkeit der unterschiedlich großen, der in einem Fahrzeugsitz sitzenden Personen, komfortabel und leicht angepasst und bedient werden kann.

Die Aufgabe wird in Verbindung mit den Merkmalen des Oberbegriffs des Patentanspruchs 1 dadurch gelöst, dass eine Tragkonstruktion ein Basisgestell und einen ersten Verstellmechanismus umfasst, wobei das Basisgestell ein längsverschiebbares, sitzteilseitiges und rückenlehnenseitiges Basisgestell aufweist, zwischen denen ein längenveränderliches, die Sitzauflage tragendes und/oder ausbildendes Element angeordnet ist, wobei die Verschiebung des Basisgestells zu einer Aktivierung des am längenveränderlichen Elementes angreifenden ersten Verstellmechanismus führt, der sowohl eine Anpassung eines Sitzflächenwinkels als auch eine Veränderung der Sitzlänge und einhergehend eine Veränderung der Sitzteilfläche sowie der Rückenlehnefläche bewirkt.

Hierbei kann die Kopplung des Basisgestells und des Verstellmechanismus mechanisch oder aber auch elektrisch sein.

In bevorzugter Ausgestaltung der Erfindung ist das längenveränderliche Element ein Seilzug, der durch den ersten Verstellmechanismus in eine verkürzte oder in eine verlängerte Position bringbar ist.

Der dazu benötigte Verstellmechanismus weist eine starr angeordnete zweite Umlenkrolle im rückenlehnenseitigen Basisgestell und eine erste bewegliche Umlenkrolle im Bereich des Sitzteiles an einer Schwinge auf.

Die Schwinge ist über mindestens eine Strebe mit dem sitzteilseitigen Basisgestell verbunden, so dass eine gemeinsame Verlagerung des sitzteilseitigen und rückenlehnenteilseitigen Basisgestells eine Dreh-Schwenkbewegung der Schwinge um eine Schwingenschwenkachse bewirkt.

Der Seilzug ist auf der zum ersten Verstellmechanismus gehörenden ersten Umlenkrolle im Bereich des Sitzteiles und auf der zum ersten Verstellmechanismus gehörenden zweiten Umlenkrolle im Bereich der Rückenlehne umlaufend angeordnet und wird jeweils einendseitig in einem Aufwickelvorrat unter Vorspannung gehalten.

Durch die Positionierung des Seilzuges über dem ersten Verstellmechanismus ergeben sich grundsätzlich folgende Positionen. Nämlich eine Position, bei welcher der Seilzug durch eine Vorwärtsbewegung des sitzteilseitigen Basisgestells in seiner verkürzten Position automatisch gespannt wird und die verkürzte Sitzlänge, die somit reduzierte Sitzteilfläche, die verkürzte Rückenlehnenlänge und die somit reduzierte Rückenlehnenfläche der Sitzauflage bewirkbar ist.

Eine andere gegenüberliegende Position ist durch eine Rückwärtsbewegung des Seilzuges bewirkbar, indem das sitzteilseitige Basisgestell in seiner verlängerten Position automatisch abgewickelt wird und die verlängerte Sitzlänge, die somit vergrößerte Sitzteilfläche, die verlängerte Rückenlehnenlänge und die somit vergrößerte Rückenlehnenfläche der Sitzauflage bewirkbar ist.

In weiterer bevorzugter Ausgestaltung wird die Vorwärts- oder Rückwärtsbewegung des sitzteilseitigen Basisgestells durch die Dreh-Schwenkbewegung der Schwinge um die Schwingenschwenkachse hervorgerufen. Durch die Vorwärtsbewegung wird eine Veränderung des Sitzflächenwinkels in Bezug auf den Hüftpunkt der Perzentilgruppe weiblich [5%il] unter Ausbildung des verkleinerten Sitzwinkels oder durch Rückwärtsbewegung eine Veränderung des Sitzflächenwinkels in Bezug auf den Hüftpunkt der Perzentilgruppe männlich [95%il] unter Ausbildung des vergrößerten Sitzwinkels bewirkt. Die Perzentilgruppe weiblich [5%il] und die Perzentilgruppe männlich [95%il] stellen damit die Randbereiche des gesamten Einstellbereichs dar.

Die Aufgabe wird ferner in Verbindung mit den Merkmalen des Oberbegriffs des Patentanspruchs 6 dadurch gelöst, dass die Tragkonstruktion zumindest ein längsverschiebbares, sitzteilseitiges Basisgestell und einen zweiten Verstellmechanismus umfasst, wobei das sitzteilseitige Basisgestell ein längenveränderliches, die Sitzauflage tragendes Element ist, wobei allein die Verschiebung des Basisgestells zu einer Aktivierung des am längsveränderlichen Elementes angreifenden zweiten Verstellmechanismus führt, der sowohl eine Anpassung eines Sitzflächenwinkels als auch eine Veränderung der Sitzlänge und einhergehend eine Veränderung der Sitzteilfläche bewirkt.

In bevorzugter Ausgestaltung der Erfindung ist das längenveränderliche Element kein Seilzug, sondern ein Teleskopelement aus einem Führungsrohr und einem Teleskoprohr, das durch den zweiten Verstellmechanismus in eine eingefahrene Teleskopelementposition oder in eine ausgefahrene Teleskopelementposition bringbar ist. Selbstverständlich sind zwischen diesen Positionen, die wiederum den statistischen Randbereichen der Perzentilgruppe Frau [5%il] beziehungsweise der Perzentilgruppe Mann [95%il] entsprechen, alle Zwischenstellungen ausbildbar, wobei die Endstellungen als auch die Zwischenstellungen durch den zweiten Verstellmechanismus hervorgerufen werden.

In weiterer bevorzugter Ausgestaltung der Erfindung weist der zweite Verstellmechanismus eine Hebelelementanordnung auf, die mit einer Karosserie und dem Teleskoprohr derart verbunden ist, dass eine Verlagerung des sitzteilseitigen Basisgestells eine Schub-Schwenkbewegung um eine Teleskoprohrachse bewirkt. Das Teleskopelement aus Führungsrohr und Teleskoprohr ist derart ausgebildet, dass es auf seinem Teleskoprohr eine

vordere Sitzauflage auf einem vorderen Sitzteil und auf seinem Führungsrohr eine hintere Sitzauflage auf seinem hinteren Sitzteil trägt. Durch die Verlagerung des sitzteilseitigen Basisgestells ist eine Position des Teleskoprohres in seiner eingefahrenen Position und seiner ausgefahrenen Position ausbildbar.

Dabei führt eine Vorwärtsbewegung des sitzteilseitigen Basisgestells zu einer eingefahrenen Position, bei der das Teleskoprohr automatisch auf das oder in das Führungsrohr aufschiebbar oder einschiebbar ist und die verkürzte Sitzlänge und somit die reduzierte Sitzteilfläche bewirkbar ist.

Andererseits führt eine Rückwärtsbewegung des sitzteilseitigen Basisgestells zu einer ausgefahrenen Position des Teleskoprohres gegenüber dem Führungsrohr, wobei das Austeleskopieren des Teleskoprohres die verlängerte Sitzlänge und somit die vergrößerte Sitzteilfläche der Sitzauflage bewirkt.

Gleichzeitig wird durch eine Vorwärts- oder Rückwärtsbewegung des sitzteilseitigen Basisgestells die Schub-Schwenkbewegung des Teleskoprohres um die Teleskoprohrachse hervorgerufen, so dass durch die Vorwärtsbewegung eine Veränderung des Sitzflächenwinkels in Bezug auf den Hüftpunkt der Perzentilgruppe weiblich [5%il] unter Ausbildung des verkleinerten Sitzwinkels oder durch die Rückwärtsbewegung des sitzteilseitigen Basisgestells eine Veränderung des Sitzflächenwinkels in Bezug auf den Hüftpunkt der Perzentilgruppe männlich [95%il] unter Ausbildung des vergrößerten Sitzwinkels bewirkt wird.

In weiterer Ausgestaltung, ist die vordere Sitzauflage durch das drehbar mit dem verlagerbaren Teleskoprohr verbundene, vordere Sitzteil durch Führungsseile um eine dritte Umlenkrolle verlagerbar. Durch diese erfindungsgemäße Anordnung ist eine Vorwärtsbewegung des sitzteilseitigen Basisgestells in seine eingefahrene Position möglich, bei der automatisch die vordere Sitzauflage unter die hintere Sitzauflage ziehbar ist, wodurch wiederum die verkürzte Sitzlänge und die reduzierte Sitzteilfläche der gesamten Sitzauflage bewirkbar ist.

Analog dazu führt.eine Rückwärtsbewegung des sitzteilsseitigen Basisgestells in eine ausgefahrene Position der vorderen Sitzauflage, die automatisch unter der hinteren Sitzauflage hervorziehbar ist, wodurch die verlängerte Sitzlänge und somit die vergrößerte Sitzteilfläche der gesamten Sitzauflage erreicht wird.

Diese Lösung stellt somit nicht nur eine Veränderung der Sitzlänge beziehungsweise der Sitzfläche und des gleichzeitig veränderbaren Sitzflächenwinkels sicher, sondern es wird gleichzeitig eine Anpassung des Abstandes des Fahrzeugsitzes von einem, im Fußbereich liegenden, Pedal und/oder eines Lenkrades des Fahrzeuges erreicht.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Darstellung der Problemstellung der Größenverhältnisse zwischen einer statistischen Perzentilgruppe weiblich [5%il] und einer statistischen Perzentilgruppe männlich [95%il],
- Figur 2: eine schematische Darstellung der Abhängigkeit eines Sitzwinkels von den Größenverhältnissen gemäß Figur 1,
- Figur 3A: eine perspektivische, schematische Ansicht eines Sitzes mit seinen wichtigsten Komponenten in einer ersten Ausführungsvariante,
- Figur 3B: eine schematische Seitenansicht des Sitzes gemäß Figur 3A in der Position Perzentilgruppe weiblich [5%il] und Perzentilgruppe männlich [95%il],
- Figur 4A, 4B: eine schematische Seitenansicht des Sitzes mit seinen wesentlichen Komponenten in einer zweiten Ausführungsvariante,
- Figur 4C: eine perspektivische Ansicht des Sitzes, gemäß Figur 4A, 4B von hinten in der Position der Perzentilgruppe weiblich [5%il],
- Figur 4D: eine schematische Seitenansicht, gemäß Figur 4C,
- Figur 4E: eine perspektivische Ansicht des Sitzes, gemäß Figur 4A, 4B von hinten in der Position der Perzentilgruppe männlich [95%il],
- Figur 4F: eine schematische Seitenansicht, gemäß Figur 4E,
- Figur 4G: eine Darstellung der Detaillösung zur Veränderung der vorderen Sitzauflage, gemäß Figur 4C, 4E und
- Figur 4H: eine Darstellung der Detaillösung zur Veränderung der vorderen Sitzauflage gemäß Figur 4D, 4F.

Die Figuren 1 und 2 wurden bereits in der Einleitung detailliert beschrieben, wobei anhand der Figuren 1 und 2 die grundsätzliche Problematik der unterschiedlichen Größenverhältnisse und Sitzwinkelverhältnisse von kleineren, insbesondere weiblichen, Personen gegenüber größeren, insbesondere männlichen, Personen dargestellt worden ist. Hierbei handelt es sich selbstverständlich um statistische Werte, so dass die Bezeichnung Perzentilgruppe männlich [95%il] als rein statistischer Randwert zu betrachten ist und hier selbstverständlich auch große weibliche Personen beziehungsweise umgekehrt in der Perzentilgruppe weiblich [5%il] als Randwert selbstverständlich auch kleinere männliche Personen einzuordnen sind.

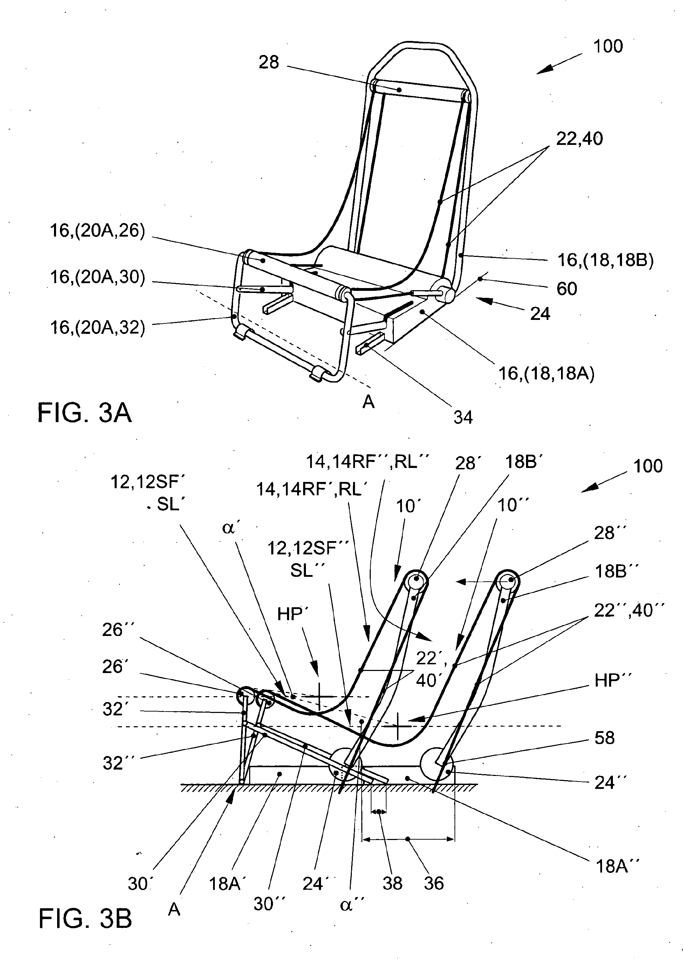

Die Aufgabe wird durch eine erste und zweite Ausführungsvariante gelöst, wobei die Lösungen in den Figuren 3A und 3B beziehungsweise 4A bis 4H detailliert dargestellt sind.

Gleiche Teile in den beiden Ausführungsvarianten werden mit gleichen Bezugsziffern versehen und die jeweiligen statistisch untersuchten Positionen der Perzentilgruppe weiblich [5%il] werden mit' und die Positionen der Perzentilgruppe männlich [95%il] werden mit " gekennzeichnet.

Figur 3A zeigt die wesentlichen Komponenten eines Fahrzeugsitzes 100 der ersten Ausführungsvariante. Der Fahrzeugsitz 100 weist eine Tragkonstruktion 16 auf, die ein sitzteilseitiges Basisgestell 18A und ein rückenlehnenseitiges Basisgestell 18B umfasst. Die Tragkonstruktion 16 umfasst zusätzlich einen ersten Verstellmechanismus 20A, der eine erste Umlenkrolle 26, eine Strebe 30 und eine Schwinge 32 umfasst, wobei der erste Verstellmechanismus 20A zudem eine zweite Umlenkrolle 28 aufweist. Der Sitz 100 weist ferner ein Gelenk 24 auf, welches das rückenlehnenseitige Basisgestell 18B mit dem sitzteilseitigen Basisgestell 18A der Tragkonstruktion 16 verbindet. Figur 3A zeigt ferner ein karosseriefestes Schienensystem 34, in welchem die Tragkonstruktion 16 gegenüber einer Karosserie 60 in und entgegen einer Fahrtrichtung bewegbar ist. Das Schienensystem 34

beziehungsweise die links und rechts angeordneten Schienen sind in geeigneter Weise mit dem sitzteilseitigen Basisgestell 18A verbunden. Figur 3A zeigt ein zwischen dem sitzteilseitigen Basisgestell 18A und dem rückenlehenseitigen Basisgestell 18B angeordnetes längenveränderliches Element 22, welches eine nicht dargestellte Sitzauflage 10 trägt.

In der ersten Ausführungsvariante, Figur 3A und 3B, ist das längenveränderliche Element 22 eine Seilzug 40, der über die erste und zweite Umlenkrolle 26, 28 des ersten Verstellmechanismus 20A geführt ist. Die Länge des Seilzuges 40 ist verkürzbar oder verlängerbar, indem die Schwinge 32 um eine Schwingenschwenkachse A bewegt wird. Durch diese Bewegung der Schwinge 32 in beziehungsweise entgegen einer Bewegungsrichtung des sitzteilseitigen Basisgestells 18A sind die Sitzlänge SL, die Rückenlehnenlänge RL sowie ein Sitzflächenwinkel α der gegenüber einem Hüftpunkt beziehungsweise einer Hüftpunktposition HP festgestellt wird in einfacher Weise gleichzeitig veränderbar, so dass die betrachteten Positionen der Perzentilgruppe weiblich [5%il] beziehungsweise der Perzentilgruppe männlich [95%il] und selbstverständlich die Zwischenpositionen eingestellt werden können.

Die Funktion wird anhand der Figur 3B in einer Seitenansicht des Sitzes 100 detailliert dargestellt und beschrieben.

Der Sitz 100 ist in der Position' Perzentilgruppe weiblich [5%il] und in der Position " Perzentilgruppe männlich [95%il] dargestellt. Das Gelenk 24 beziehungsweise die Gelenkposition 24 bleibt in den Positionen 24' und 24" unverändert. Eine Veränderung der Sitzlänge SL und der Rückenlehnenlänge RL beziehungsweise des Sitzwinkels α ist lediglich durch die reversible Bewegung in beziehungsweise entgegen einer Bewegungsrichtung des sitzteilseitigen Basisgestells 18A möglich. Zur Verdeutlichung wurde der Hüftpunkt HP beziehungsweise die Hüftpunktposition HP' und HP" dargestellt.

Ausgehend von der hinteren Position", der Perzentilgruppe männlich [95%il], wird die Figur nachfolgend erläutert. Der Seilzug 40" ist hier in der hinteren Position als verlängerter Seilzug 40" dargestellt und bildet eine verlängerte Sitzlänge SL" und somit eine vergrößerte Sitzteilfläche 12 SF" aus. Gleichzeitig werden eine verlängerte Rückenlehnenlänge RL" und somit eine vergrößerte Rückenlehnenfläche 14 RF" ausgebildet. Das Basisgestell 18 befindet sich als sitzteilseitiges Basisgestell 18A" beziehungsweise als rückenlehnenseitiges Basisgestell 18B" in seiner hinteren Position ". Die erste und zweite Umlenkrolle 26, 28 befinden sich in der hinteren Position 26", 28". In Bezug auf den Hüftpunkt HP" bildet sich ein großer Sitzflächenwinkel α" aus.

Um nun von dieser Position eine Veränderung der Sitzlänge SL", Rückenlehnenlänge RL" und des Sitzflächenwinkels α" der Sitzauflage 10" in Richtung der Position' der Perzentilgruppe weiblich [5%il] zu erreichen wären normalerweise eine Reihe von Einstelltätigkeiten notwendig.

Der Sitz 100 in der ersten Ausführungsvariante ermöglicht jedoch durch eine Verstellbewegung des Basisgestells 18, insbesondere des sitzteilseitigen Basisgestells 18A", zur Position 18A' eine komplexe Verstellbewegung. Das sitzteilseitige Basisgestell 18A" wird über einen Verstellweg 36 nach links verschoben. Gemäß Figur 3B wird bei vollständiger Nutzung des Verstellweges 36 die Position ' der Perzentilgruppe weiblich [5%il] erreicht. Bei dieser Verstellbewegung über den Verstellweg 36 erfolgt eine Bewegung der Schwinge 32 aus der Position 32" in die Position 32', da die Strebe 30" ihre hintere Position verlässt und in die Position 30' überführt wird, wobei die Strebe bei der Positionsveränderung 30" zu 30' einen Verstellweg 38 vollführt. Das Verhältnis des Verstellweges 36 zu 38 liegt bei zirka 6:1.

Durch die Schwingenbewegung 32" zu 32' wird die erste Umlenkrolle 26" in die Position 26' verlagert. Diese erste Umlenkrolle 26 ist also lageveränderlich 26", 26' auf der Schwinge 32", 32' angeordnet, während die zweite Umlenkrolle aus der Position 28" lediglich in die Position 28' verlagert wird, ohne ihre Position gegenüber dem rückenlehnenseitigen Basisgestell 18B", 18B' zu verändern. Daraus ergibt sich, dass sich der Seilzug 40" in die Position 40' verkürzt, wozu ein Aufwickelvorrat 58 im Bereich des Gelenkes 24 ausgebildet ist, in dem der Seilzug 40 jeweils einendseitig nach Bewegung auf der jeweiligen Umlenkrolle 26, 28 unter Vorspannung angeordnet ist und dort aufgewickelt oder abgewickelt wird. Somit führt die Vorwärtsbewegung zu einer Verkürzug des Seilzuges 40' und somit zu einer verkürzten Sitzlänge SL' sowie einer verkürzten Rückenlehnenlänge RL', einem kleineren Sitzflächenwinkel α' gegenüber dem nun erreichten Hüftpunkt HP' und zu einer Reduzierung der Sitzteilfläche 12 SF' beziehungsweise 14 RF' der Sitzauflage 10 in der Position 10'.

Die beschriebene Verstellbewegung des Sitzes 100 in die Position " ist selbstverständlich reversibel ausführbar, wobei ohne Veränderung der Gelenkposition 24', 24" die Veränderung des Sitzflächenwinkels α', α" beziehungsweise der Sitzlänge SL', SL" und RL', RL" erreichbar ist.

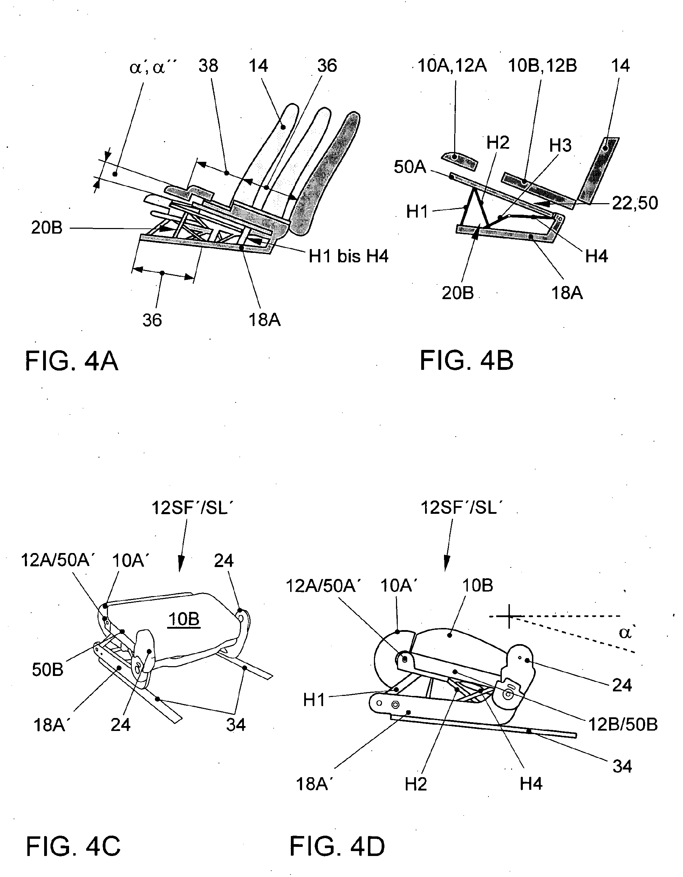

Die Figuren 4A und 4B zeigen die zweite Ausführungsvariante in einer schematischen Seitenansicht, ebenfalls einen Sitz 100, bei dem der Sitzflächenwinkel α einen kleineren beziehungsweise größeren Sitzflächenwinkel α', α", gemäß Figur 4A, erreicht und zumindest die Sitzauflage 10, die hier aus einer vorderen und hinteren Sitzauflage 10A, 10B gebildet ist, gleichzeitig mit Veränderung des Sitzflächenwinkels α', α" veränderbar ist.

Der Sitz 100 kann selbstverständlich ebenfalls eine Rückenlehne 14 aufweisen, wobei hier nur die Veränderung einer reduzierten beziehungsweise vergrößerten Sitzteilfläche 12SF', 12SF", analog zu Figur 3A, 3B, und der verkürzten oder verlängerten Sitzlänge SL', SL", analog Figur 3A, 3B, ebenfalls über eine Verkürzung beziehungsweise Verlängerung der Sitzauflage 10A', 10A" erfolgt, wie die nachfolgenden Figuren 4C bis 4H näher erläutern.

Die Figuren 4A und 4B zeigen, dass als wesentliche Komponente das sitzteilseitige Basisgestell 18A als längenveränderliches Element 22 ein Teleskopelement 50 aufweist, dessen Längenveränderung über einen zweiten Verstellmechanismus 20B des längsverschiebbaren sitzteilseitigen Basisgestells 18A der Tragkonstruktion 16 des Fahrzeugsitzes 100 erfolgt.

Das Teleskopelement 50, als längenveränderliches Element 22, ist in die Positionen und " bringbar, da das Teleskopelement 50 ein Teleskoprohr 50A und ein Führungsrohr 50B umfasst, wobei das Teleskoprohr 50A mit dem vorderen Sitzteil 12A, welches die vordere Sitzauflage 10A trägt, verbunden ist. Das hintere Sitzteil 12B trägt die hintere Sitzauflage 10B, und bleibt unverändert in seiner Position. Nur das vordere Sitzteil 12A mit der vorderen Sitzauflage 10A ist über das Teleskoprohr 50A teleskopierbar, dessen Bewegung wie folgt erreichbar ist.

Der zweite Verstellmechanismus 20B ist durch eine Hebelelementanordnung mit mehreren Hebelelementen H1, H2, H3, H4 gekennzeichnet, die in Figur 4B und den nachfolgenden Figuren 4C bis 4F jeweils, wenn sichtbar, gekennzeichnet sind und in folgender Weise ausgeführt werden.

Zunächst ist der Fahrzeugsitz 100 wiederum in einem Schienensystem 34 mittels seines Sitzgestells verschiebbar gelagert. Als Sitzgestell dient wiederum das sitzteilseitige Basisgestell 18A. An diesem sitzteilseitigen Basisgestell 18A ist das teleskopierbare, vordere Sitzteil 12A mit seiner vorderen Sitzauflage 10A angeordnet.

Die Hebelelementanordnung des zweiten Verstellmechanismus 20B weist ein erstes Hebelelement H1 auf, welches einerseits drehbar am sitzteilseitigen Basisgestell 18A und andererseits mit dem Teleskoprohr 50A und somit mit dem vorderen Sitzteil 12A verbunden ist.

Ein drittes Hebelelement H3 ist einerseits drehbar an einer Karosserie 60 befestigt. An dem dritten Hebelelement H3 ist ferner ein zweites Hebelelement H2 und endseitig ein viertes Hebelelement H4, ebenfalls drehbar, befestigt, wobei das vierte Hebelelement H4 andererseits wiederum drehbar mit dem sitzteilseitigen Basisgestell 18A verbunden ist.

Das zweite Hebelelement H2 ist mit seinem anderen Ende zusätzlich mit dem ersten Hebelelement H1 und dem Teleskoprohr 50A drehbar verbunden.

Beim Verschieben des sitzteilseitigen Basisgestells 18A wird mit Hilfe des vierten Hebelelementes H4 die Verschiebebewegung auf das dritte Hebelelement H3 übertragen. Dieses wandelt die Schiebe- in eine Drehbewegung um und reduziert die Wegstrecke des vierten Hebelelementes H4 um zirka ein Drittel. Diese reduzierte Wegstrecke wird mit Hilfe des zweiten Hebelelementes H2 auf das erste Hebelelement H1 und gleichzeitig von H2 und H1 auf das Teleskoprohr 50A übertragen.

Dadurch führt das Teleskoprohr 50A nur zirka zwei Drittel der Wegstrecke des sitzteilseitigen Basisgestells 18A aus und das vordere Sitzteil 12A wird um die Differenzwegstrecke um circa 1/3 verlängert, wodurch sich die Sitzteilfläche 12SF vergrößert oder reduziert und die Sitzlänge SL verlängert oder verkürzt wird. Diese Abhängigkeit zeigt Figur 4A im Grundsatz durch das Bezugszeichen 36, welches den möglichen Verstellweg des sitzteilseitigen Basisgestells 18A verdeutlicht. Daraus ergibt sich ein Verstellweg 38 der Sitzauflage 10A' zu 10A" (Figuren 4C, 4D zu 4E, 4F). Beispielsweise ermöglicht ein Verstellweg 36 von circa. 280 mm eine Verlagerung der Sitzauflage 10A' zu 10A" um circa. 100 mm. Der Fahrzeugsitz 100 wird also insgesamt um den Verstellweg 36 nach hinten verlagert, wobei sich die Sitzauflage 10A um den Verstellweg 38 nach vorne verlängert.

Gleichzeitig vergrößert oder reduziert sich dabei der Sitzflächenwinkel α. Hierbei ist beispielsweise eine Winkelveränderung von α,' zu α" und umgekehrt von 6,5° realisierbar.

Das Verhältnis 2/3 zu 1/3 beziehungsweise die mögliche Winkelveränderung des Sitzflächenwinkels α ist durch entsprechende veränderte Auslegung der Längen und/oder Anbindungen der Hebelelemente H1 bis H4 variierbar.

Die Figuren 4C und 4D zeigen für die zweite Ausführungsvariante die Hebelelementanordnung H1 bis H4 in der vorderen Position des sitzteilseitigen Basisgestells 18A'. In dieser Position des sitzteilseitigen Basisgestells 18A' gegenüber dem Schienensystem 34 ist das Teleskoprohr 50A in der Position 50A' eingefahren und die vordere Sitzauflage 10A' des vorderen Sitzteiles 12A ist in der verkürzten Position bezüglich der Sitzlänge SL' und mit der reduzierten Sitzfläche 12SF' angeordnet. Die Figuren 4C und 4D zeigen zudem den dabei ausgebildeten kleineren Sitzflächenwinkel α', bei entsprechender Hebelelementanordnung H1 bis H4.

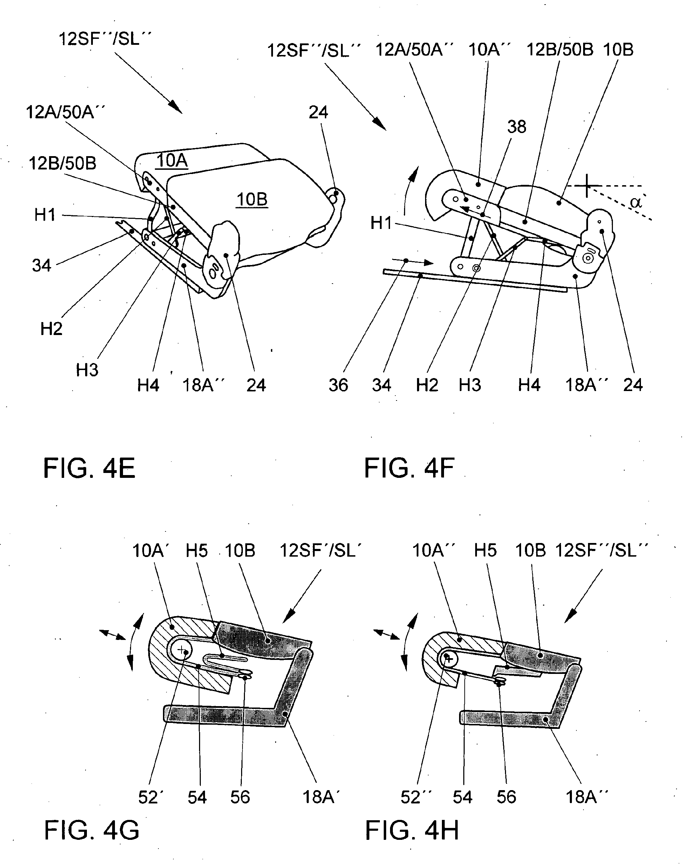

Im Gegensatz dazu zeigen die Figuren 4E und 4F die vorab beschriebene Hebelelementanordnung H1 bis H4 bei einem vergrößerten Sitzflächenwinkel α" mit einem ausgefahrenen Teleskoprohr 50A", bei verlängerter Sitzauflage 10A" und verlagertem vorderen Sitzteil 12A. Hierbei wird dann eine vergrößerte Sitzteilfläche 12SF" mit einer verlängerten Sitzlänge SL" ausgebildet. In beiden Figuren der perspektivischen Ansicht (Figur 4E) und der Seitenansicht (Figur 4F) ist also durch die Rückverlagerung des sitzteilseitigen Basiselementes 18A in die Position 18A" eine Vergrößerung der Sitzfläche 12SF" und Verlängerung der Sitzlänge SL" unter Erreichung eines größeren Sitzflächenwinkels α" möglich.

Die Ausfahrbarkeit der vorderen Sitzauflage 10A bei Rückverlagerung des sitzteilseitigen Basisgestells 18A und gleichzeitiger Verlagerung des vorderen Sitzteiles 12A zeigen in technischer Ausführung die Figuren 4G und 4H. Die Verlagerung des vorderen Sitzteiles 12A führt gleichzeitig zu einer Verlagerung einer dritten Umlenkrolle 52, die in Figur 4G in der Position 52' bei einem sitzteilseitigen Basisgestell 18A' in vorderster Position und verkürzter Sitzlänge SL' und reduzierter Sitzfläche 12 SF' bei eingefahrenem Teleskoprohr 50A' (nicht sichtbar) angeordnet ist.

Im Gegensatz dazu zeigt Figur 4H die dritte Umlenkrolle 52" in der ausgefahrenen Position, bei hinterer Stellung des sitzteilseitigen Basisgestells 18A" mit vergrößerter Sitzfläche SF" und verlängerter Sitzlänge SL" bei ausgefahrenem Teleskoprohr 50A" (nicht dargestellt).

Die Verlagerung der vorderen Sitzauflage 10A' der Figur 4G zur Position 10A" der Figur 4H erfolgt über mindestens ein, in die Sitzauflage 10A eingebrachtes Führungsseil 54. Das Führungsseil 54 läuft um die dritte Umlenkrolle 52 und um eine vierte Umlenkrolle 56 und ist einerseits an dem hinteren Sitzteil 12B, das die hinteren Sitzauflage 10B trägt und andererseits an einem Bereich des hinteren Sitzteiles 12B angeordneten fünften Hebelelementes H5 befestigt.

Bevorzugt werden zwei parallele Führungsseile 54 links und rechts in der Sitzauflage 10A mit der jeweils zugehörigen Anbindung ausgeführt.

Bei der Verstellbewegung 36 aus der vorderen Position 18A' des sitzteilseitigen Basisgestells 18A' in die hintere Position 18A" (Figur 4G zu Figur 4H) wird das Führungsseil 54 durch Verlängerung des oder der Teleskoprohres/e 50A von der Position 50A' in die Position 50A" (Figur 4C, 4D zu Figur 4E, 4F) über die sich verlagernde dritte Umlenkrolle 52' zu 52" und die sich gleichzeitig verlagernde vierte Umlenkrolle 56' zu 56", die beide am vorderen Sitzteil 12A angeordnet sind, relativ zum fünften Hebelelement H5 bewegt und die vordere Sitzauflage 10A' wird in die Position 10A" um den Verstellweg 38 nach vorn verlagert und gemäß Figur 4D, 4F und 4H unter der unbeweglichen hinteren Sitzauflage 10B herausgezogen. Die vergrößerte Sitzfläche 12SF" und verlängerte Sitzlänge SL" ist unter gleichzeitiger Einnahme des Sitzflächenwinkels α" erreicht (Figur 4H).

Bei der reversiblen Verstellbewegung 36 des sitzteilseitigen Basisgestells 18A" zu 18A' (Figur 4H zu Figur 4G) wird das Führungsseil 54 durch Verkürzung des oder der Teleskoprohres/e 50A von der Position 50A" in die Position 50A' unter gleichzeitiger Einziehung der vorderen Sitzauflage, 10A" zu 10A' um den Verstellweg 38 unter die hintere Sitzauflage 10B gemäß Figur 4C, 4E, und 4G eingezogen, so dass die dritte Umlenkrolle 52" gemeinsam mit dem vorderen Sitzteil 12A unter gleichzeitiger Verlagerung der vierten Umlenkrolle 56" relativ zum fünften Hebelelement H5 wieder rückverlagert wird. Die reduzierte Sitzfläche 12SF" und verkürzte Sitzlänge SL" ist unter gleichzeitiger Einnahme des Sitzflächenwinkels α' erreicht (Figur 4G).

Alternativ zur Anordnung Hebelelement H5 und vierter Umlenkrolle 56 ist auch eine alternative Ausführung denkbar, die in den Figuren nicht dargestellt ist, bei der das Führungsseil 54 einendseitig nicht am Hebelelement H5 fixiert wird und über die vierte Umlenkrolle umgelenkt (verkürzt oder verlängert) wird, sondern an einer am hinteren Sitzteil 12B angeordneten Spannrolle oder einem Federelement befestigt wird.

In der Position' der Figur 4G ist dann das Führungsseil 54 auf die Spannrolle aufgewickelt beziehungsweise durch ein Federelement unter Vorspannung gespannt, während das Führungsseil 54 in der Position" der Figur 4H von der Spannrolle abgewickelt wird beziehungsweise gegen die Vorspannung des Federelementes gelängt wird.

Die erste und zweite Ausführungsvariante automatisieren und optimieren also durch eine Vor- und Zurückverstellbewegung des sitzteilseitigen Basisgestells 18A die Sitzergonomie hinsichtlich des Sitzflächenwinkels α und/oder der Sitzteil- beziehungsweise Rückenteillängen SL, RL unter Berücksichtigung des statistischen Größenverhältnisses der Nutzergruppen, die mit den Gruppen der Perzentilgruppe weiblich [5%il] bis zu der Perzentilgruppe männlich [95%il] erfasst worden sind.

Der Bedienaufwand für den Sitzbenutzer wird wesentlich reduziert und es erfolgt somit eine Komforterhöhung für die, den Fahrzeugsitz 100 benutzenden, Personen.

Zudem wird ein Sicherheitsgewinn bei der Pedalerreichbarkeit für die Personen der jeweiligen Größengruppe zwischen der Perzentilgruppe weiblich [5%il] und der Perzentilgruppe männlich [95%il] erreicht.

Für größere Personen entsteht durch die gleichzeitige Rückverlagerung des sitzteilseitigen Basisgestells 18A und Verlängerung der Sitzlänge SL sowie Vergrößerung des Sitzflächenwinkels α des Sitzteiles 12 eine verbesserte, weil verlängert und somit optimierte Oberschenkelauflage.

Für die kleineren Personen ist bei Vorverlagerung des sitzteilseitigen Basisgestells 18A und Verkürzung der Sitzlänge SL des Sitzteiles 12 sowie der Verkleinerung des Sitzflächenwinkels α ein vereinfachter Einstieg möglich und das Pedal wird leichter erreicht.

### Bezugszeichenliste

- ': Perzentilgruppe weiblich [5%il]
- ": Perzentilgruppe männlich [95%il]
- 10: Sitzauflage
- 10': Sitzauflage [5%il]
- 10": Sitzauflage [95%il]
- 10A: vordere Sitzauflage
- 10A': vordere verkürzte Sitzauflage [5%il]
- 10A": vordere verlängerte Sitzauflage [95%il]
- 10B: hintere Sitzauflage
- 12: Sitzteil
- 12A: vorderes Sitzteil
- 12B: hinteres Sitzteil
- 12SF: Sitzteilfläche
- 12SF': reduzierte verkürzte Sitzteilfläche [5%il]
- 12SF": vergrößerte Sitzteilfläche [95%il]
- 14: Rückenlehne
- 14RF: Rückenlehnenfläche
- 14RF': reduzierte Rückenlehnenfläche [5%il]
- 14RF": vergrößerte Rückenlehnenfläche [95%il]
- 16: Tragkonstruktion
- 18: Basisgestell
- 18A: sitzteilseitiges Basisgestell
- 18A': sitzteilseitiges Basisgestell [5%il]
- 18A": sitzteilseitiges Basisgestell [95%il]
- 18B: rückenlehnenseitiges Basisgestell
- 18B': rückenlehnenseitiges Basisgestell [5%il]
- 18B": rückenlehnenseitiges Basisgestell [95%il]
- 20: Verstellmechanismus
- 20A: erster Verstellmechanismus
- 20B: zweiter Verstellmechanismus
- 22: längenveränderliches Element/Elementposition
- 22': längenveränderliches Element [5%il]
- 22": längenveränderliches Element [95%il]
- 24: Gelenk/Gelenkposition
- 24': Gelenkposition[5%il]
- 24": Gelenkposition [95%il]
- 26: erste Umlenkrolle/Umlenkrollenposition
- 26': erste Umlenkrolle [5%il]
- 26": erste Umlenkrolle [95%il]
- 28: zweite Umlenkrolle/Umlenkrollenposition
- 28': zweite Umlenkrolle [5%il]
- 28": zweite Umlenkrolle [95%il]
- 30: Strebe/Strebenposition
- 30': Strebe [5%il]
- 30": Strebe [95%il]
- 32: Schwinge/Schwingenposition
- 32': Schwinge [5%il]
- 32": Schwinge [95%il]
- A: Schwingenschwenkachse
- 34: Schienensystem [karosseriefest]
- 36: Verstellweg Basisgestell 18A' zu 18A"
- 38: Verstellweg 30' zu 30", oder 10A' zu 10A"
- 40: Seilzug/Seilzugposition
- 40': verkürzter Seilzug
- 40": verlängerter Seilzug
- 50: Teleskopelement
- 50A: Teleskoprohr
- 50B: Führungsrohre
- 50A': eingefahrenes Teleskoprohr [5%il]
- 50A": ausgefahrenes Teleskoprohr [95%il]
- B: Teleskoprohrachse
- 52: dritte Umlenkrolle/Umlenkrollenposition
- 52': dritte Umlenkrolle [5%il]
- 52": dritte Umlenkrolle [95%il]
- 54: Führungsseile
- 56: vierte Umlenkrolle
- 56': vierte Umlenkrolle [5%il]
- 56": vierte Umlenkrolle [95%il]
- 58: Aufwickelvorrat
- 60: Karosserie
- 100: Fahrzeugsitz
- α: Sitzflächenwinkel
- α': kleiner Sitzflächenwinkel [5%il]
- α": großer Sitzflächenwinkel [95%il]
- SL: Sitzlänge
- SL': verkürzte Sitzlänge [5%il]
- SL": verlängerte Sitzlänge [95%il]
- RL: Rückenlehne
- RL': verkürzte Rückenlehnenlänge [5%il]
- RL": verlängerte Rückenlehnenlänge [95%il]
- HP: Hüftpunkt/Hüftpunktposition
- HP': Hüftpunkt [5%il]
- HP": Hüftpunkt [95%il]
- H1: erstes Hebelelement
- H2: zweites Hebelelement
- H3: drittes Hebelelement
- H4: viertes Hebelelement
- H5: fünftes Hebelelement

## Patentansprüche

1. Sitz, insbesondere Kraftfahrzeugsitz, mit einer Sitzauflage (10), die ein Sitzteil (12) und eine relativ dazu verlagerbare Rückenlehne (14) umfasst, wobei die Sitzauflage (10) unter Veränderung einer Sitzteilfläche (12SF) und einer Rückenlehnenfläche (14RF) zur Lageverstellung an einer Tragkonstruktion (16) des Sitzes beweglich angeordnet ist,
**dadurch gekennzeichnet, dass**
die Tragkonstruktion (16) ein Basisgestell (18) und einen ersten Verstellmechanismus (20, 20A) umfasst, wobei das Basisgestell (18) ein längsverschiebbares, sitzteilseitiges und rückenlehnenseitiges Basisgestell (18A, 18B) aufweist, zwischen denen ein längenveränderliches, die Sitzauflage (10) tragendes und/oder ausbildendes, Element (22) angeordnet ist, wobei die Verschiebung des Basisgestells (18, 18A, 18B) zu einer Aktivierung des am längenveränderlichen Element (22, 40) angreifenden Verstellmechanismus (20) führt, der sowohl eine Anpassung eines Sitzflächenwinkels (α', α") als auch eine Veränderung der Sitzlänge (SL', SL") und einhergehend eine Veränderung der Sitzteilfläche (12SF', 12SF") sowie der Rückenlehnefläche (14RF', 14RF") bewirkt.

2. Sitz nach Anspruch 1,
**dadurch gekennzeichnet, dass**
das längenveränderliche Element (22) ein Seilzug (40) ist, der durch den ersten Verstellmechanismus (20) in eine verkürzte Seilzugposition (22', 40') oder in eine verlängerte Position (22", 40") bringbar ist.

3. Sitz nach Anspruch 2,
**dadurch gekennzeichnet, dass**
der erste Verstellmechanismus (20) eine starr angeordnete zweite Umlenkrolle (28) im rückenlehnenseitigen Basisgestell (18B) und eine erste bewegliche Umlenkrolle (26) im Bereich des Sitzteiles (12) an einer Schwinge (32) aufweist, die über mindestens eine Strebe (30) mit dem sitzteilseitigen Basisgestell (18A) verbunden sind, so dass eine gemeinsame Verlagerung des sitzteilseitigen und rückenlehnenseitigen Basisgestells (18A, 18B) eine Dreh-Schwenkbewegung der Schwinge (32) um eine Schwingenschwenkachse (A) bewirkt.

4. Sitz nach Anspruch 1 bis 3,
**dadurch gekennzeichnet, dass**
der Seilzug (40) auf der zum ersten Verstellmechanismus (20) gehörenden ersten Umlenkrolle (26) im Bereich des Sitzteiles (12) und auf der zum ersten Verstellmechanismus (20) gehörenden zweiten Umlenkrolle (28) im Bereich der Rückenlehne (14) umlaufend angeordnet ist, und jeweils einendseitig in einem Aufwickelvorrat (58) unter Vorspannung gehalten wird, wobei der Seilzug (40) durch
- eine Vorwärtsbewegung in eine Position des sitzteilseitigen Basisgestells (18A') in seiner verkürzten Position (40') automatisch spannbar ist und die verkürzte Sitzlänge (SL'), die somit reduzierte Sitzteilfläche (12SF'), die verkürzte Rückenlehnenlänge (RL') und die somit reduzierte Rückenlehnefläche (14RF') der Sitzauflage (10) oder
- eine Rückwärtsbewegung in eine Position des sitzteilseitigen Basisgestells (18A") in seiner verlängerten Position (40") automatisch abwickelbar ist und die verlängerte Sitzlänge (SL"), somit die vergrößerte Sitzteilfläche (12SF"), die verlängerte Rückenlehnenlänge (RL") und die somit vergrößerte Rückenlehnenfläche (14RF") der Sitzauflage (10) bewirkbar ist.

5. Sitz nach Anspruch 1 bis 3,
**dadurch gekennzeichnet, dass**
durch eine Vorwärtsbewegung oder Rückwärtsbewegung des sitzteilseitigen Basisgestells (18A', 18") die Dreh-Schwenkbewegung der Schwinge (32) um die Schwingenschwenkachse (A) hervorgerufen wird, die
- durch die Vorwärtsbewegung eine Veränderung des Sitzflächenwinkels (α) in Bezug auf den Hüftpunkt (HP' [5%il]) unter Ausbildung des verkleinerten Sitzwinkels (α') oder
- durch Rückwärtsbewegung eine Veränderung des Sitzflächenwinkels (α) in Bezug auf den Hüftpunkt (HP" [95%il]) unter Ausbildung des vergrößerten Sitzwinkels (α") bewirkt.

6. Sitz, insbesondere Kraftfahrzeugsitz, mit einer Sitzauflage (10), die zumindest ein Sitzteil (12) umfasst, wobei die Sitzauflage (10) unter Veränderung zumindest einer Sitzteilfläche (12A) zur Lageverstellung an einer Tragkonstruktion (16) des Sitzes beweglich angeordnet ist,
**dadurch gekennzeichnet, dass**
die Tragkonstruktion (16) zumindest ein längsverschiebbares, sitzteilseitiges Basisgestell (18A) und einen zweiten Verstellmechanismus (20, 20B) umfasst, wobei das sitzteilseitige Basisgestell (18A) ein längenveränderliches, die Sitzauflage (10A, 10B) tragendes, Element (22, 50) ist, wobei die Verschiebung des Basisgestells (18A) zu einer Aktivierung des am längsveränderlichen Element (22, 50) angreifenden zweiten Verstellmechanismus führt (20, H1, H2, H3, H4), der sowohl eine Anpassung eines Sitzflächenwinkels (α', α") als auch eine Veränderung der Sitzlänge (SL', SL") und einhergehend eine Veränderung der Sitzteilfläche (12SF', 12SF") bewirkt.

7. Sitz nach Anspruch 6,
**dadurch gekennzeichnet, dass**
das längenveränderliche Element (22) ein Teleskopelement (50) aus einem Führungsrohr (50B) und einem Teleskoprohr (50A) ist, das durch den zweiten Verstellmechanismus (20) in eine eingefahrene Teleskopelement-Position (22', 50B') oder in eine ausgefahrene Teleskopelement-Position (22", 50B") bringbar ist.

8. Sitz nach Anspruch 7,
**dadurch gekennzeichnet, dass**
der zweite Verstellmechanismus (20, 20B) eine Hebelelementanordnung (H1, H2, H3, H4) ist, die mit einer Karosserie (60) und dem Teleskoprohr (50A) derart verbunden ist, dass eine Verlagerung des sitzteilseitigen Basisgestells (18A) eine Schub-Schwenkbewegung um eine Teleskoprohrachse (B) bewirkt.

9. Sitz nach Anspruch 6 bis 8,
**dadurch gekennzeichnet, dass**
das Teleskopelement (50) auf seinem Teleskoprohr (50A) eine vordere Sitzauflage (10A) auf einem vorderen Sitzteil (12A) und auf seinem Führungsrohr (50B) eine hintere Sitzauflage (10B) auf seinem hinteren Sitzteil (12B) trägt, wobei des Teleskoprohr (50A) durch
- eine Vorwärtsbewegung in eine Position des sitzteilseitigen Basisgestells (18A') in seiner eingefahrenen Position (50A') automatisch auf oder in das Führungsrohr (50B) aufschiebbar oder einschiebbar ist und die verkürzte Sitzlänge (SL') sowie die reduzierte Sitzteilfläche (12SF') der Sitzauflage (10A) oder
- eine Rückwärtsbewegung in eine Position des sitzteilseitigen Basisgestells (18A") in seiner ausgefahrenen Position (50A") automatisch gegenüber dem Führungsrohr (50B) austeleskopierbar ist und die verlängerte Sitzlänge (SL") sowie die vergrößerte Sitzteilfläche (12SF') der Sitzauflage (10A) bewirkbar ist.

10. Sitz nach Anspruch 1 bis 3,
**dadurch gekennzeichnet, dass**
durch eine Vorwärtsbewegung oder Rückwärtsbewegung des sitzteilseitigen Basisgestells (18A', 18A") die Schub-Schwenkbewegung des Teleskoprohres (50A) um die Teleskoprohrachse (B) hervorgerufen wird, die
- durch die Vorwärtsbewegung eine Veränderung des Sitzflächenwinkels (α) in Bezug auf den Hüftpunkt (HP' [5%il]) unter Ausbildung des verkleinerten Sitzwinkels (α') oder
- durch Rückwärtsbewegung eine Veränderung des Sitzflächenwinkels (α) in Bezug auf den Hüftpunkt (HP" [95%il]) unter Ausbildung des vergrößerten Sitzwinkels (α") bewirkt.

11. Sitz nach Anspruch 9,
**dadurch gekennzeichnet, dass**
die vordere Sitzauflage (10A) durch das drehbar mit dem verlagerbaren Teleskoprohr (50A', 50A") verbundene vordere Sitzteil (12A) durch Führungsseile (54) um eine dritte Umlenkrolle (52) am vorderen Sitzteil (12A) und eine vierte Umlenkrolle (56), die an einem am hinteren Sitzteil (12B) angeordneten fünften Hebelelement (H5) angeordnet ist, verlagerbar ist und somit durch
- eine Vorwärtsbewegung in eine Position des sitzteilseitigen Basisgestells (18A') in seiner eingefahrenen Position (50A') automatisch unter die hintere Sitzauflage (10B) einziehbar ist und die verkürzte Sitzlänge (SL') sowie die reduzierte Sitzteilfläche (12SF') der Sitzauflage (10) oder
- eine Rückwärtsbewegung in eine Position des sitzteilseitigen Basisgestells (18A") in seiner ausgefahrenen Position (50A") automatisch unter der hinteren Sitzauflage (10B) hervorziehbar ist und die verlängerte Sitzlänge (SL") und die somit vergrößerte Sitzteilfläche (12SF') der Sitzauflage (10) bewirkbar ist.

12. Sitz nach Anspruch 1 oder 6,
**dadurch gekennzeichnet, dass**
neben einer Anpassung eines Sitzflächenwinkels (α', α") und der Veränderung der Sitzlänge (SL', SL") und einhergehend eine Veränderung der Sitzteilfläche (12SF', 12SF") sowie der Rückenlehnefläche (14RF', 14RF") eine Veränderung des Abstandes des Sitzes und eines Pedal und/oder eines Lenkrades des Fahrzeuges bewirkbar ist.
